# DEMANDE DE BREVET EUROPEEN

(11) **EP 4 760 556 A1**
(43) Date de publication de la demande: **17.06.2026**
(21) Numéro de dépôt: 25222407.6
(22) Date de dépôt: 10.12.2025
(51) Int. Cl.: G06F 21/32

(54) **PROCÉDÉ D AUTHENTIFICATION BIOMÉTRIQUE HOMOMORPHE**

(30) Priorité: 16.12.2024 FR 2414197
(71) Demandeur: Imprimerie Nationale, 75116 Paris (FR)
(72) Inventeur: DING, Xinghua, 75116 PARIS (FR)
(74) Mandataire: Brun, Philippe Alexandre Georges

(57) **Abrégé**

L'invention concerne un procédé (100) d'authentification biométrique homomorphe conçu pour être mis en œuvre par un système (1) comprenant une entité électronique de service (20) agencée pour fournir un accès à un service (S) et un dispositif électronique (10) associé à un individu (2) désireux d'accéder audit service (S). Un tel procédé (100) comporte une étape (120) d'authentification biométrique de l'individu (2) consistant en une étape de comparaison (122) homomorphe de données biométriques candidates (CCD) et de données biométriques de référence (CRD) préalablement chiffrées selon un schéma de chiffrement homomorphe (HCS). Ladite comparaison n'exploite donc pas en tant que tel le clair des données biométriques de référence et candidates. Ladite étape de comparaison peut être déléguée à une entité électronique de confiance (30). Une autorisation d'accès au service (S) est fonction de ladite comparaison homomorphe.

## Description

L'invention concerne le domaine de l'authentification biométrique. Une telle technique consiste en un processus de vérification de l'identité d'un individu en se basant sur des caractéristiques physiologiques propres audit individu, telles que ses empreintes digitales, les traits de son visage, les iris de ses yeux, sa voix, etc.

L'authentification biométrique gagne en popularité et est mise en œuvre dans de nombreux systèmes de sécurité et d'identification. Par exemple, on trouve une telle mise en œuvre dans la plupart des téléphones mobiles intelligents ou « smartphones » et dans d'autres appareils mobiles tels que des ordinateurs portables ou des tablettes tactiles. Les utilisateurs de tels dispositifs électroniques peuvent déverrouiller l'accès à ces derniers ou réaliser des transactions au moyen d'une reconnaissance de leur visage, d'empreintes digitales, de leur voix, sans devoir saisir des mots de passe ou codes d'identification personnels, également connus sous l'acronyme anglo-saxon PIN pour « Personal Identification Numbers ». Ainsi, de plus en plus d'applications bancaires mobiles proposent l'utilisation des empreintes digitales ou encore la reconnaissance faciale comme moyen d'identification biométrique pour garantir l'identité des clients et sécuriser des mouvements bancaires. De la même manière, on trouve de plus en plus de contrôles d'accès biométriques dans des lieux de travail afin de renforcer la sécurité des accès physiques à des bâtiments et à des systèmes informatiques, réduisant ainsi les risques de cambriolage, de vol, d'intrusion ou d'utilisations frauduleuses de données sensibles.

L'authentification biométrique est considérée plus fiable qu'une identification par mot de passe ou PIN. Elle offre en outre une meilleure expérience pour l'individu puisque ce dernier peut s'affranchir d'une mémorisation fastidieuse de mots passe dont la complexité et la fréquence de mise à jour requises sont croissantes. En outre, les caractéristiques biométriques sont propres à chaque individu et ne peuvent être facilement falsifiées ou partagées.

Une telle technique nécessite tout d'abord une première phase d'extraction de premières caractéristiques biométriques à l'aide d'un dispositif d'extraction connu et adapté à la nature de l'information biométrique choisie pour constituer un référentiel. Un tel dispositif d'extraction connu peut être une caméra matricielle pour numériser avec une grande précision le visage d'un individu ou bien un iris de ce dernier. Il peut également consister en un capteur d'empreintes digitales que celui-ci soit optique, capacitif, à ultrason ou thermique. On peut également avoir recours à un microphone pour enregistrer la voix d'un individu, etc.

Cette phase d'extraction permet ainsi de caractériser des lignes, des volumes ou courbes d'un nez, d'une bouche, la distance séparant les yeux, des minuties (bifurcations, lacs, crêtes, crochets, croisements, ponts, etc.) d'une empreinte digitale ou encore des taches ou texture de motifs d'un iris. Ces caractéristiques sont par la suite converties en un ensemble de données de référence enregistrées pour matérialiser un référentiel, généralement par un tiers de confiance capable de sauvegarder de telles informations en toutes sécurité et confidentialité.

L'étape d'authentification biométrique en tant que telle consiste quant à elle à prélever des deuxièmes données biométriques, que nous qualifierons de données biométriques candidates (selon une technique d'extraction similaire à l'extraction des premières données biométriques de référence), puis à comparer ses deuxièmes données candidates aux premières données biométriques de référence. On mesure alors la ressemblance ou inversement la dissemblance entre lesdites premières et deuxièmes données biométriques puis l'on compare ladite mesure à un seuil d'acceptation ou de rejet pour confirmer ou infirmer une demande d'authentification.

La collecte et le stockage de données biométrique, fussent-ils mis en œuvre par un tiers de confiance, questionnent quant à la protection de la vie privée, à la confidentialité et à la protection d'informations par nature personnelles. Les données biométriques doivent être impérativement stockées de manière sécurisée car, contrairement à un mot de passe, une données biométrique caractérisant une empreinte digitale ou un iris ne peut être réinitialisée. Les acteurs ou systèmes informatiques qui stockent des données biométriques d'individus ont ainsi une lourde responsabilité technique, juridique, financière et éthique.

Pour éviter de manipuler en clair les données de référence et les données candidates dans le but de les comparer, il est connu en cryptographie, comme l'évoque les documents EP4075728A1, US2014/0281567A1 ou encore EP4333367A1, d'exploiter un schéma de chiffrement homomorphe. Une telle technique s'appuie sur des caractéristiques algébriques qui permettent d'effectuer des opérations mathématiques sur des données chiffrées sans avoir à les déchiffrer au préalable. Le déchiffrement du résultat desdites opérations sur des données chiffrées donne ainsi un résultat identique à celui qui aurait résulté d'opérations portant sur les données non chiffrées, c'est-à-dire en clair. Toutefois, les équipements mettant en œuvre de tels schémas de chiffrement homomorphe pour, d'une part, chiffrer des données de référence ou candidates et/ou, d'autre part, effectuer des opérations de comparaison sur de telles données chiffrées, nécessitent des ressources matérielles conséquentes pour mettre en œuvre de telles opérations mathématiques dans un temps acceptable. De tels équipements sont ainsi généralement dédiés et coûteux. Par ailleurs, les données chiffrées de référence sont volumineuses et nombreuses. Elle nécessitent d'être échangées entre des équipements qui stockent celles-ci et ceux qui les exploitent pour les comparer à des données candidates, ces dernières étant également parfois transmises entre de tels équipements. Les dimensions et les quantités de telles données chiffrées obèrent ainsi les performances et la bande passante des systèmes de communication exploités à cette seule fin. Les solutions à base schéma de chiffrement homomorphe pâtissent de ces inconvénients et demeurent peu répandues.

L'invention permet de répondre aux inconvénients et risques préalablement évoqués et favorise le déploiement de l'authentification biométrique. L'invention propose notamment une solution d'authentification biométrique pour des prestataires de services tout en respectant la protection et la réglementation des données personnelles, les données sensibles n'étant mémorisées, si nécessaire, que par un tiers de confiance, par exemple régalien. Lesdits prestataires ne disposent et ne connaissent que des données chiffrées suffisantes pour procéder à une authentification biométrique.

Parmi les nombreux avantages procurés par la mise en œuvre de l'invention, nous pouvons mentionner que le procédé propose :
- de ne pas exposer, communiquer ou encore manipuler le clair de données biométriques par la mise en œuvre de schémas de chiffrement homomorphe, car seules des données biométriques chiffrées sont exploitées et partagées tout au long du processus d'authentification ;
- alléger la bande passante des réseaux utilisés pour mettre en œuvre un tel processus d'authentification biométrique en désignant et exploitant une ou plusieurs zones d'intérêt restreintes issues de l'information biométrique disponible comme données biométriques candidates mais suffisantes pour identifier sans ambiguïté un individu ;
- exploiter de nombreuses informations physiologiques ou biométriques comme la voix, le visage, l'iris, l'empreinte digitale, etc. ;
- réduire les dimensions des données candidates dont l'extraction peut être déléguée à un dispositif propre à l'usager ayant des capacités de calcul limitées au regard de celles de l'entité chargée de la comparaison entre ces données candidates et des données de référence plus riches.

À cette fin, l'invention prévoit un procédé d'authentification biométrique homomorphe, ledit procédé étant conçu pour être mis en œuvre par un système comprenant une entité électronique de service agencée pour fournir un accès à un service à un individu désireux d'accéder audit service, ledit procédé comportant :
- une étape d'enrôlement d'un individu consistant à collecter des premières données biométriques dites « de référence » dudit individu, ladite étape d'enrôlement comportant :
   ∘ une sous-étape de production de données biométriques de référence chiffrées selon un schéma de chiffrement homomorphe donné réalisée à partir des données biométriques de référence,
   ∘ une sous-étape d'enregistrement desdites données biométriques de référence chiffrées dans une mémoire de données ;
- une étape d'authentification biométrique de l'individu désireux d'accéder audit service consistant en :
   ∘ une étape de collecte de deuxièmes données biométriques dites « candidates » dudit individu, ladite étape de collecte comportant :
      ▪ une sous-étape d'extraction de caractéristiques biométriques à l'aide d'un capteur adapté à la nature d'une information biométrique d'intérêt et de production des données biométriques candidates ;
      ▪ une sous-étape de production de données biométriques candidates chiffrées à partir desdites données biométriques candidates et du schéma de chiffrement homomorphe donné ;
   o une étape de comparaison desdites premières et deuxièmes données biométriques et de production d'une mesure de la ressemblance entre lesdites premières et deuxièmes données biométriques, ladite étape de comparaison desdites premières et deuxièmes données biométriques et de production d'une mesure de ressemblance consistant en une opération de comparaison homomorphe entre les données biométriques candidates chiffrées et les données biométriques de référence chiffrées sans avoir à exploiter ni exposer en tant que telles les données biométriques de référence et candidates ;
- une étape d'autorisation d'accès au service qui est fonction de la mesure de ressemblance.

Pour réduire les dimensions des données biométriques candidates, préserver la bande passante nécessaire aux échanges de données chiffrées et réduire le temps de calcul nécessaire pour produire les données biométriques candidates chiffrées, comparer lesdites premières et deuxièmes données biométriques et produire une mesure de la ressemblance entre lesdites premières et deuxièmes données biométriques, le système comporte un dispositif électronique associé à l'individu désireux d'accéder audit service. Un tel dispositif électronique propre à l'usager peut disposer avantageusement de capacités de calcul limitées au regard celles de l'entité électronique de service. Un tel dispositif électronique est en outre agencé pour communiquer avec ladite entité électronique de service, comporter le capteur adapté à l'extraction de caractéristiques biométriques et émettre une requête en authentification biométrique à destination de l'entité électronique de service. L'entité électronique de service est quant à elle agencée pour, à réception d'une telle requête en authentification biométrique, transmettre un message invitant ledit dispositif électronique à produire les données biométriques candidates, ledit message comportant le schéma de chiffrement homomorphe et des paramètres de sélection d'une ou plusieurs régions d'intérêt de faibles dimensions au regard des dimensions de l'intégralité des données biométriques candidates disponibles lors de l'extraction de l'information biométrique par ledit capteur adapté.

L'étape de collecte des deuxièmes données biométriques candidates de l'individu :
- est mise en œuvre par ledit dispositif électronique associé à un individu à la réception dudit message l'invitant à produire les données biométriques candidates ;
- est agencée de sorte la sous-étape de production des données biométriques candidates consiste en une production de données candidates propres à la ou aux régions d'intérêt de faibles dimensions désignées par les paramètres de sélection ;
- comporte une sous-étape de transmission desdites données biométriques candidates chiffrées selon ledit schéma de chiffrement homomorphe, à l'entité électronique de service.

Pour renforcer la confidentialité des données biométriques de référence extraites lors d'un enrôlement, l'étape d'enrôlement d'un procédé selon l'invention peut comporter une sous-étape de suppression des données biométriques de référence à l'issue de la production des données biométriques de référence chiffrées.

Pour des raisons similaires, l'étape de collecte des deuxièmes données biométriques candidates peut comporter une sous-étape de suppression des données biométriques candidates à l'issue de la transmission des données biométriques candidates chiffrées à destination de l'entité électronique de service.

Pour limiter le rejeu de procédures d'authentifications sur la base de données biométriques candidates d'ores et déjà exploitées, l'étape de collecte des deuxièmes données biométriques candidates peut comporter une sous-étape de suppression des données biométriques candidates chiffrées à l'issue de la transmission desdites données biométriques candidates chiffrées à destination de l'entité électronique de service.

Selon un premier exemple d'application d'un tel procédé selon l'invention, les données biométriques de référence et les données biométriques candidates peuvent être issues d'une image d'une empreinte digitale. Dans ce cas, elles désignent respectivement des types de minutie, des attributs caractéristiques desdites minuties et des coordonnées desdites minuties au sein de ladite image. Les paramètres de sélection peuvent alors consister en la désignation d'une région d'intérêt au sein de l'image de l'empreinte digitale.

Selon un deuxième exemple d'application, les données biométriques de référence et les données biométriques candidates peuvent être issues d'une image d'un iris. Elles désignent alors respectivement un ensemble de caractéristiques de motifs de ladite image comprises dans un ensemble de caractéristiques comprenant une moyenne de valeurs de pixels de l'image, une distribution de valeurs desdits pixels au sein de l'image, une entropie. Les paramètres de sélection peuvent dès lors consister en la désignation de tout ou partie d'un anneau ou d'un cadran de l'iris.

Selon un premier mode d'agencement d'un système adapté pour une mise en œuvre de l'invention, l'étape d'enrôlement et/ou l'étape de comparaison des premières et deuxièmes données biométriques chiffrées et de production d'une mesure de ressemblance sont mises en œuvre par l'entité électronique de service.

En variante pour décharger de contraintes sécuritaires ou légales l'entité électronique de service d'un tel système, ce dernier peut comporter une entité électronique de confiance en communication avec l'entité électronique de service. Dans ce cas, l'étape de comparaison des premières et deuxièmes données biométriques chiffrées et de production d'une mesure de ressemblance est mise en œuvre par ladite entité électronique de confiance. Une telle étape de comparaison est dès lors mise en œuvre en réponse à une requête en comparaison homomorphe émanant de l'entité électronique de service, ladite requête en comparaison homomorphe véhiculant les données biométriques candidates chiffrées et les données biométriques de référence chiffrées, la mesure de ressemblance étant transmise en réponse par l'entité électronique de confiance à ladite entité électronique de service.

Toujours dans un but similaire, l'étape d'enrôlement peut être mise en œuvre par l'entité électronique de confiance. Les données biométriques de référence chiffrées sont dès lors communiquées par ladite l'entité électronique de confiance à l'entité électronique de service en réponse à une requête en chargement émanant de ladite entité électronique de service.

Selon un deuxième objet, l'invention concerne un système comportant une entité électronique de service agencée pour fournir un accès à un service et un dispositif électronique associé à un individu, ledit système étant agencé pour mettre en œuvre un procédé selon l'invention. Comme évoqué précédemment, un tel système peut en outre comporter une entité électronique de confiance en communication avec l'entité électronique de service.

D'autres caractéristiques et avantages apparaîtront plus clairement à la lecture de la description qui suit et à l'examen des figures qui l'accompagnent parmi lesquelles :
- la figure 1 illustre un système d'authentification biométrique selon l'invention ;
- la figure 2 illustre la mise en œuvre d'un tel procédé appliqué à des données biométriques issues d'une empreinte digitale ;
- la figure 3 illustre une première description fonctionnelle d'un procédé d'authentification biométrique homomorphe selon l'invention ;
- la figure 4 illustre une deuxième description fonctionnelle d'un tel procédé lorsque le système qui le met en œuvre comporte une entité électronique de confiance.

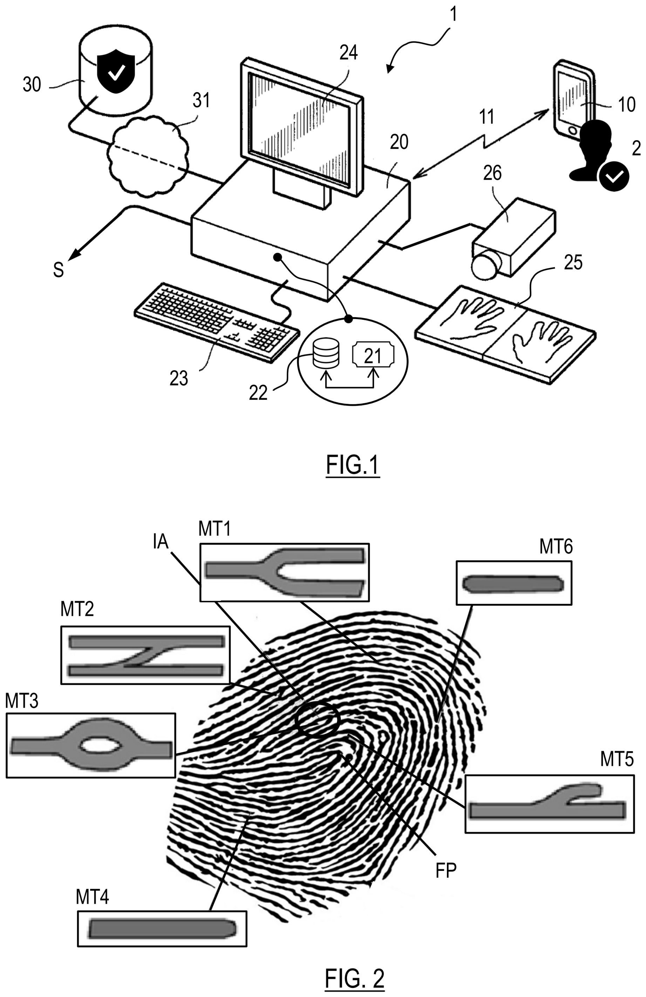

La figure 1 présente l'architecture fonctionnelle d'un système d'authentification biométrique 1. Ledit système 1 comporte une entité électronique de service 20 agencée pour fournir un accès à un service S. Un tel service S peut consister, de manière non limitative, en une transaction bancaire, un accès à une ressource physique ou électronique, une visualisation ou réciproquement une réception d'un contenu multimédia, etc. Un tel système 1 comporte en outre un dispositif électronique 10 associé à un individu 2 désireux d'accéder audit service S.

L'entité électronique de service 20 comporte une unité de traitement 21 sous la forme d'un ou plusieurs microprocesseurs. Elle est reliée au monde extérieur via un réseau de communication 31 filaire (internet ou intranet) ou sans fil. Ladite entité électronique de service 20 peut comporter une interface homme-machine de sortie et d'entrée (un écran 24 et un clavier 23) permettant la saisie d'informations, notamment relatives à l'identité civile d'un individu lorsque ladite entité électronique de service 20 est exploitée pour accomplir des enrôlements d'individus 2, c'est-à-dire lorsqu'elle est chargée de constituer un référentiel biométrique d'individus désireux d'accéder au service dont l'accès est régi par ladite entité électronique de service 20. L'entité électronique de service 20 peut comporter dès lors une caméra matricielle 26 pour numériser avec une grande précision le visage d'un individu 2 ou bien un iris de ce dernier. L'entité 20 peut en outre comporter un capteur d'empreintes digitales que celui-ci soit optique, capacitif, à ultrason ou thermique. L'invention ne saurait être limitée par ces seuls exemples de capteurs d'informations biométriques.

La collecte et le stockage de données biométriques imposent une lourde responsabilité technique, juridique, financière et éthique. Aussi, en variante ou en complément, un tel enrôlement d'individu 2 peut être effectué par un tiers de confiance, représenté sur la figure 1 par une entité électronique de confiance 30 agencée peu ou prou à l'instar de l'entité électronique 20 mais opérée par une autorité gouvernementale ou régalienne par exemple, voire par toute autre autorité satisfaisant aux contraintes de sécurité et de confidentialité requises. Ainsi, quel que soit l'agencement d'un système 1, des données biométriques de référence extraites au gré d'enrôlements d'individus et découlant d'informations biométriques telles que des portraits, des empreintes digitales ou des iris, peuvent être enregistrées dans une mémoire de données 21 propre à l'entité électronique de service 20 ou avantageusement propre à l'entité électronique 30 agissant en tant que tiers de confiance. Dans ce cas, l'entité électronique de service 20 peut être connectée via le réseau 31 à une base de données distante de données biométriques hébergées par le tiers de confiance 30. Pour adapter son fonctionnement et transformer un simple ordinateur en une entité électronique de services au sens de l'invention, une telle entité électronique de service 20 peut comporter une mémoire de programmes, confondue ou distincte de la mémoire de données 21, pour enregistrer un ou plusieurs programmes informatiques dont les instructions de programme provoquent la mise en œuvre de procédés fonctionnels idoines. On entend par « mémoire » toute mémoire informatique qu'elle soit volatile ou non. Une mémoire non volatile est une mémoire informatique dont la technologie conserve ses données en l'absence d'une alimentation en énergie électrique. Elle peut contenir des données résultant de saisies, de calculs, de mesures et/ou des instructions de programmes. Les principales mémoires non volatiles actuellement disponibles sont inscriptibles électriquement telles que la technologie EPROM (« Erasable Programmable Read-Only Memory », selon une terminologie anglo-saxonne) ou encore inscriptibles et effaçables électriquement telles que les technologies EEPROM (« Electrically-Erasable Programmable Read-Only Memory », selon une terminologie anglo-saxonne), flash, SSD (« Solid-State Drive », selon une terminologie anglo-saxonne), etc. Les mémoires non volatiles se distinguent des mémoires dites « volatiles » dont les données sont perdues en l'absence d'une alimentation électrique. Les principales mémoires volatiles actuellement disponibles exploitent les technologies RAM (« Random Access Memory » selon une terminologie anglo-saxonne ou encore nommée « mémoire vive »), DRAM (mémoire vive dynamique, nécessitant une réactualisation régulière), SRAM (mémoire vive statique nécessitant une telle réactualisation lors d'une sous-alimentation électrique), DPRAM ou VRAM (particulièrement adaptées à la vidéo), etc.

Pour prévenir une lourde exposition de l'entité électronique de service 20 en termes de responsabilités au regard des données biométriques d'individus, l'invention prévoit que ladite entité électronique de service 20 ne comporte dans sa mémoire de données 21 que des données biométriques de référence chiffrées CRD, c'est-à-dire produites à partir de données biométriques RD (en clair) extraites selon un schéma de chiffrement déterminé. Ainsi, lorsque l'entité électronique de service 20 est chargée de réaliser des enrôlements d'individus, c'est-à-dire chargée de produire de telles données biométriques de référence RD, ces dernières sont avantageusement détruites à l'issue du chiffrement de celles-ci pour produire les données biométriques de référence chiffrées CRD. Lorsque de telles données biométriques de référence RD (en clair) sont extraites et produites par l'entité électronique de confiance 30, cette dernière produit également des données biométriques de référence chiffrées CRD à partir de données biométriques RD en clair selon un schéma de chiffrement déterminé. L'entité électronique de service 20 peut ainsi, via une requête en chargement LQ collecter de telles données biométriques de référence chiffrées CRD par l'entité électronique tiers de confiance 30 sans avoir jamais eu à connaître les données biométriques de référence RD en tant que telles c'est-à-dire en clair.

Lorsqu'un individu 2 est désireux de faire appel à un service S dont l'un des accès est régi par l'entité électronique de service 20, ledit individu 2 doit s'authentifier et prouver qu'il est bien habilité à accéder à un tel service S. Pour cela, l'individu 2 exploite un dispositif électronique 10, sous la forme d'un ordinateur, d'un téléphone mobile intelligent, d'une tablette tactile ou de tout autre objet électronique nomade ou non, adapté à cet usage. Un tel dispositif électronique 10 est ainsi agencé pour communiquer, via une liaison 11 (avantageusement sans fil ou filaire) avec l'entité électronique 20 pour mettre en oeuvre conjointement une authentification biométrique de l'individu 2 détenteur dudit dispositif électronique 10.

A l'instar d'une entité électronique de service 20, un tel dispositif électronique 10 comporte une unité de traitement, un ou plusieurs capteurs d'informations biométriques (caméra, scanner) et une mémoire de données et/ou de programme. Comme évoqué précédemment, une telle procédure d'authentification biométrique est connue. Elle consiste à collecter des données biométriques dites « candidates » CD de l'individu 2 au moyen du dispositif électronique 10 (via un capteur d'informations biométriques propre), communiquer de telles données biométriques candidates CD à l'entité électronique de service 20 qui se charge de mettre en œuvre une comparaison des données biométriques candidates CD à des données biométriques de référence RD d'individus préalablement enrôlés. Une telle entité électronique de service 20 peut produire une mesure de la ressemblance SM entre des données biométriques candidates et des données biométriques de référence associées à l'individu cherchant à prouver son identité. Selon ladite mesure SM, l'entité électronique de service 20 octroie ou rejette une demande d'accès au service S à l'individu 2.

Comme exposé précédemment, une telle approche connue soulève des risques et des questionnements liés notamment au stockage et à la transmission de données biométriques candidates en clair entre un dispositif électronique 10 et une entité électronique de service 20. L'invention prévoit ainsi que le dispositif électronique 10 ne transmette pas directement de telles données biométriques candidates CD en tant que telles, c'est-à-dire en clair, mais que ledit dispositif électronique 10 produise des données biométriques candidates chiffrées CCD à partir des données biométriques candidates CD extraites à partir d'un schéma de chiffrement donné. Seules ces données biométriques candidates chiffrées sont transmises, via la liaison 11, à l'entité électronique de service 20.

Un tel schéma d'échange de données chiffrées entre deux entités électroniques existe, que le schéma de chiffrement soit symétrique (chiffrement au moyen d'une clé secrète partagée entre les deux entités électroniques) ou bien asymétrique (la première entité chiffre des données à l'aide d'une clé publique de l'entité électronique destinataire qui est seule en capacité de déchiffrer lesdites données à l'aide de sa clé secrète). Toutefois, l'entité destinatrice se doit de déchiffrer et enregistrer, ne serait-ce que temporairement, les données biométriques candidates (en clair) pour effectuer une comparaison desdites données avec un référentiel, lui aussi en clair. L'invention va à l'encontre d'une telle approche connue et prévoit que le schéma de chiffrement HCS requis pour produire des données biométriques de référence chiffrées CRD et pour produire des données biométriques candidates chiffrées CCD soit un schéma de chiffrement dit « homomorphe ». Un tel schéma de chiffrement HCS permet à l'entité électronique de service 20 de comparer des premières données biométriques chiffrées (données biométriques candidates chiffrées CCD) à des deuxième données biométriques chiffrées (données biométrique de référence chiffrées CRD) et de produire une mesure de la ressemblance de ces données sans devoir déchiffrer et manipuler lesdites premières et deuxièmes données biométriques en clair pour réaliser ladite opération de comparaison.

Comme évoqué précédemment, en cryptographie, un algorithme de chiffrement homomorphe est un système possédant des caractéristiques algébriques qui lui permettent de commuter avec certaines opérations mathématiques, c'est-à-dire qu'il permet d'effectuer lesdites opérations sur des données chiffrées sans avoir à les déchiffrer d'abord. Le déchiffrement du résultat desdites opérations sur des données chiffrées donnera ainsi le même résultat qu'en ayant effectué ces opérations sur les données non chiffrées, c'est-à-dire en clair ; cette propriété permet de confier des calculs à un agent externe, sans que les données ni les résultats soient accessibles à cet agent.

L'invention ne saurait être limitée par le choix d'un schéma de chiffrement homomorphe particulier, également connu sous l'appellation anglo-saxonne « fully homomorphic encryption » et l'acronyme FHE. Il est ainsi possible de citer de manière non exhaustive les schémas CKKS (Cheon-Kim-Kim-Song), GSW (Craig Gentry, Amit Sahai, and Brent Waters), BLLN (Bos, Lauter, Loftus, and Naehrig) ou encore BFV (Brakerski/Fan-Vercauteren), LTV (Lopez-Alt, Tromer, and Vaikuntanathan), DGHV (Marten van Dijk, Craig Gentry, Shai Halevi, and Vinod Vaikuntanathan), etc.

A l'instar des risques et responsabilités évoqués en lien avec l'entité électronique de service 20, le dispositif électronique 10 peut être adapté pour supprimer toutes données biométriques candidates CD (en clair) après la production de données candidates chiffrées CCD.

Toujours pour préserver l'entité électronique de service 20 de certaines responsabilités, l'invention prévoit que celle-ci puisse déléguer l'opération de comparaison homomorphe des données biométriques candidates chiffrées CCD à des données biométriques de référence chiffrées CRD à l'entité électronique de confiance 30. L'entité électronique de service 20 requiert ainsi une comparaison homomorphe via une requête en comparaison HCQ émanant de ladite entité électronique de service 20, ladite requête en comparaison HCQ véhiculant des données biométriques candidates chiffrées CCD et les données biométriques de référence chiffrées CRD, une mesure de ressemblance SM entre ces données chiffrées étant transmise en réponse par l'entité électronique de confiance 30 à ladite entité électronique de service 20.

L'invention prévoit de manière accessoire que les échanges entre les différents objets électroniques (entité électronique de service 20, entité électronique de confiance 30, dispositif électronique 10) puissent également être signés, voire chiffrés de sorte que les objets destinataires puissent s'assurer de l'identification de l'émetteur et soient seuls habilités à les déchiffrer. Un tel schéma de signature et/ou de chiffrement vient ainsi « encapsuler » les échanges de données, elles-mêmes chiffrées selon un schéma de chiffrement homomorphe.

Par ailleurs, le volume de données chiffrées échangées ainsi que la mise en œuvre d'opérations homomorphes portant sur des données chiffrées de taille conséquente nécessaires à l'exploitation de l'invention peuvent être coûteux en bande passante et en ressources matérielles, voire en temps de calcul. Pour prévenir un tel inconvénient, l'invention prévoit que les données biométriques candidates ne portent que sur une ou plusieurs régions d'intérêts, avantageusement restreintes au regard de l'ensemble des données biométriques résultant d'une extraction totale d'une empreinte digitale ou d'un iris, par exemple. A l'instar, du jeu « Où est Charlie » (créé par Martin Handford), également connu sous les appellations anglo-saxonnes « Where's Wally ? » ou encore « Where's Waldo? » qui consiste à retrouver un personnage caractéristique (en l'espèce Charlie) à l'intérieur d'une image de grandes dimensions au regard de celles de Charlie, ainsi que très riche en détails, en personnages ou d'objets divers, l'invention prévoit que pour satisfaire à une authentification biométrique, il soit suffisant de prouver qu'une partie restreinte de données biométriques candidates chiffrées (région d'intérêt) soient similaires à des données biométriques de référence chiffrées au sein d'une ou plusieurs régions d'intérêt restreintes. Ainsi, il n'est pas obligatoire d'échanger et de comparer des données biométriques chiffrées de grandes dimensions, c'est-à-dire de comparer l'intégralité des données biométriques candidates chiffrées découlant d'une extraction par le dispositif électronique 10. Pour mettre en œuvre une telle variante avantageuse, l'entité électronique de service 20 peut transmettre des paramètres de sélection SP audit dispositif électronique 10 pour que ce dernier produise des données candidates chiffrées CCD propres à une ou plusieurs régions d'intérêt, et donc de faibles dimensions au regard de celle de l'intégralité des données biométriques candidates disponibles lors de l'extraction de l'information biométrique désignée.

La figure 2 illustre, à titre d'exemple non limitatif, des caractéristiques biométriques exploitables à partir d'une empreinte digitale FP pour identifier un individu. Une telle empreinte digitale FP comprend des éléments caractéristiques que l'on nomme « minuties ». Ladite figure 2 illustre des exemples de types (référencés respectivement MT1 à MT6) de minuties d'une empreinte digitale FP. Une empreinte digitale est un dessin formé par un doigt sur un support suffisamment lisse pour que celui-ci révèle des dermatoglyphes. Ces derniers sont des figures de la face palmaire d'un doigt dessinées par les plis et les crêtes épidermiques chez les humains. Les empreintes digitales sont uniques à chaque individu et chaque doigt a son empreinte propre. La probabilité que deux personnes aient les mêmes empreintes digitales est quasi nulle. Plusieurs formes ou types de minutie peuvent être identifiées et localisées dans une empreinte digitale afin d'identifier une personne. L'exemple de la figure 2 présente quelques exemples de type de minuties que l'on peut lire au sein d'une représentation graphique FP. On y distingue notamment :
- une bifurcation MT1 décrivant une ligne se divisant en deux lignes ;
- un pont MT2 décrivant une courte crête entre deux crêtes parallèles ;
- un lac MT3 décrivant une crête qui bifurque sous la forme de deux lignes qui se réunissent peu après pour former à nouveau une crête ;
- une terminaison MT4 décrivant une fin abrupte d'une ligne ;
- un crochet MT5 décrivant une bifurcation pour engendrer une ligne courte et une deuxième ligne plus longue que la précédente ;
- une crête indépendante décrivant un segment.

Un iris humain est quant à lui situé dans l'humeur aqueuse. Il est entouré par le blanc de l'œil. La pupille est située en son centre, la cornée se trouve devant lui et le cristallin derrière. L'iris correspond à la partie colorée de l'œil et est utilisé en biométrie pour reconnaître une personne à l'instar d'une empreinte digitale FP décrite en lien avec la figure 2. La formation d'un iris humain commence dès la phase de gestation. Des éléments structurels et distinctifs sont créés avant la naissance, la pigmentation se poursuivant les premières années suivant la naissance. La formation d'un iris est chaotique, générant des motifs de grandes variabilités en nombre de caractéristiques. Parmi ces caractéristiques, on peut citer la collerette (appelée ainsi car elle forme le dessin d'une collerette autour de la pupille), des taches pigmentaires, des cryptes, des couronne ciliaires décrivant des enchevêtrements de tubes fins, des sillons, etc. Ces caractéristiques demeurent constantes, du moins varient très peu, durant la vie d'un individu. Ainsi, un iris présente des motifs stables, uniques qui ne sont pas d'origine génétique contrairement à la couleur des yeux. Ainsi, des iris respectifs de deux individus, indépendamment de tout lien de parenté éventuelle entre ces derniers, ne présentent pas des motifs identiques. Il en est de même pour des vrais jumeaux.

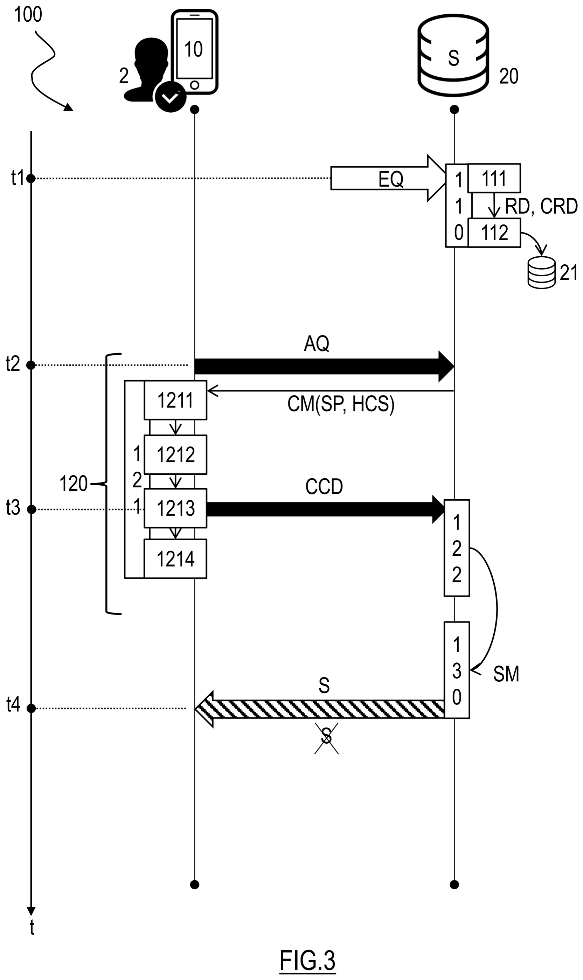

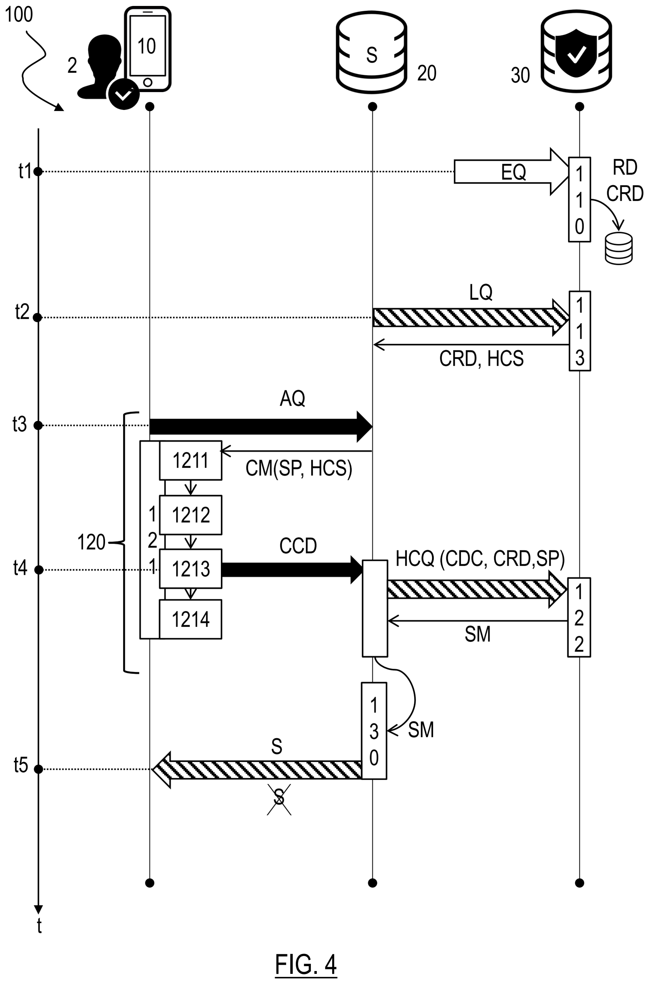

Les figures 3 et 4 présentent respectivement deux procédés d'authentification biométrique homomorphe conformes à l'invention et mis en œuvre par des systèmes 1 tels que ceux décrit en lien avec la figure 1. De tels systèmes 1 comprennent une entité électronique de service 20 agencée pour fournir un accès à un service S et un dispositif électronique 10 associé à un individu 2 désireux d'accéder audit service S. La figure 3 décrit un procédé mis en œuvre par un tel système 1 qui ne comporte pas d'entité électronique de confiance tierce à l'entité électronique 20. La figure 4 présente, quant à elle, des variantes de réalisation de procédés d'authentification biométrique homomorphe conformes à l'invention lorsque ledit système 1 comporte une entité électronique de confiance 30, par exemple régalienne ou gouvernementale, venant ainsi décharger l'entité électronique de service 20 de certaines tâches et donc de certaines responsabilités.

Ainsi, selon l'exemple de la figure 3, en liaison avec la description structurelle d'un système illustré par la figure 1, un procédé 100 d'authentification biométrique homomorphe conforme à l'invention conçu pour être mis en œuvre par un système comprenant une entité électronique de service 20 agencée pour fournir un accès à un service S et un dispositif électronique 10 associé à un individu 2 désireux d'accéder audit service S, ledit dispositif électronique 10 communiquant avec ladite entité électronique de service 20 comporte, à l'instar de procédés connus :
- une étape 110 d'enrôlement préalable consistant à collecter des premières données biométriques dites « donnés biométriques de référence » RD par individu susceptible de demander à accéder au service S ;
- une étape 120 d'authentification biométrique d'un individu 2 lors d'une requête ou demande d'accès audit service S ;
- une étape 130 d'autorisation d'accès octroyée audit individu 2 au service S selon le résultat de l'étape 120.

L'étape d'enrôlement est généralement réalisée une fois par individu, contrairement aux étapes 120 et 130 qui sont exécutées à chaque demande d'accès à un service exprimée par ledit individu.

L'étape d'enrôlement 110 d'un individu auprès d'une entité électronique est une étape connue. Toutefois, pour la mise en œuvre de l'invention, elle comporte une spécificité décrite ultérieurement.

Ainsi, selon l'exemple du procédé selon la figure 3, le processus d'enrôlement se fait auprès, directement de l'entité électronique de service 20. Une telle étape 110 débute par une requête ou demande en enrôlement EQ adressée à ladite entité électronique de service 20.

L'étape 110 comporte tout d'abord une sous-étape de production 111 de données biométriques de référence RD par la collecte d'informations biométriques au moyen d'un capteur adapté, tel que le capteur 25 pour une empreinte digitale ou une caméra 26 pour un iris. Pour illustrer le procédé 100, considérons comme source d'informations biométriques une empreinte digitale, telle que l'empreinte FP illustrée en lien avec la figure 2. Un scanner 25 délivre ainsi une image de ladite empreinte digitale d'un ou plusieurs doigts de l'individu concerné par l'enrôlement. Les données biométriques correspondent à la position et la géométrie de minuties parmi les types précédemment décrits en lien avec la figure 2, leurs localisations dans l'empreinte, le nombre et la géométrie (longueur des segments et angles formés par des ponts, des crochets, etc.) de minuties. Les positions peuvent être exprimées au regard du centre (également parfois nommé « cœur » de l'empreinte digitale considérée. De telles données biométriques peuvent également comporter des distances entre deux minuties d'un même type et/ou leurs positions respectives.

Pour ne pas exposer de telles données de références à d'éventuelles attaques qui pourraient nuire à la confidentialité de telles données de référence, l'invention prévoit qu'une étape d'enrôlement 110 comporte une sous-étape 111 de chiffrement desdites données biométriques de référence RD pour produire des données biométriques de référence chiffrées CRD selon un schéma HCS de chiffrement homomorphe donné. L'étape d'enrôlement 110 comporte alors une sous-étape d'enregistrement 112 desdites données biométriques de référence chiffrées CRD dans une mémoire de données 22 de l'entité électronique 20.

Pour renforcer l'objectif consistant à ne pas exposer les données biométriques de référence RD initialement produites dans l'étape d'enrôlement 110, c'est-à-dire avant le chiffrement 111 de celles-ci, l'invention prévoit une sous-étape optionnelle 113 de suppression desdites données biométriques de référence RD à l'issue de la production 111 des données biométriques de référence chiffrées CRD.

Une telle étape d'enrôlement 110 peut être itérée pour enrôler différents individus 2 désireux d'accéder à un service S dont l'accès est régi par l'entité électronique de service 20. Cette dernière constitue ainsi une banque de données biométriques de référence dans sa mémoire de données 22.

Lorsqu'un individu (en l'espèce l'individu 2 sur la figure 3) désire un tel accès (après que celui-ci aie satisfait à une étape préalable d'enrôlement 110 lors d'un instant noté t1 sur la figure 3), le dispositif électronique 10 qu'il détient émet une requête en authentification biométrique AQ adressée à l'entité électronique de service 20. Celle-ci est émise à l'instant t2 sur la figure 3.

En réponse à une telle requête en authentification biométrique AQ, l'entité électronique 20 interprète une telle requête AQ et déclenche une étape 120 de collecte de données biométriques candidates CD de l'individu 2. Pour cela, ladite entité électronique de service 20 adresse un message CM à destination dudit dispositif électronique 10 l'invitant à produire lesdites données biométriques candidates CD. Un tel message CM comporte le schéma de chiffrement homomorphe HCS requis pour que lesdites données biométriques candidates puissent être chiffrées à l'issue de leur production. Pour limiter la bande passante et le temps ou les ressources nécessaires à la production de telles données chiffrées, ainsi que pour éviter le rejeu de requêtes en authentification biométrique AQ, un tel message CM peut comporter avantageusement des paramètres de sélection SP d'une région d'intérêt de la source d'informations biométriques, par exemple la région IA sur l'exemple de la figure 2. Une telle région d'intérêt est généralement restreinte au regard de l'entièreté des informations biométriques disponibles mais suffisante pour attester d'une identité de l'individu.

Le dispositif électronique 10, à la réception dudit message CM déclenche la mise en œuvre d'une sous-étape 1211 (de l'étape de collecte 120) d'extraction de caractéristiques biométriques à l'aide d'un capteur adapté à la nature d'une information biométrique d'intérêt désignée par l'entité électronique de service 20 au moyen des paramètres de sélection SP, et de production des données biométriques candidates CD, à l'image des opérations conduites par ladite entité électronique de service 20 pour constituer les données biométriques de référence RD lors de la campagne d'enrôlement 110. Toujours à l'instar de ce qu'a pu réaliser (étape 111) ladite entité électronique de service 20, le dispositif électronique 10 met en œuvre une sous-étape 1212 de production de données biométriques candidates chiffrées CCD à partir desdites données biométriques candidates CD et du schéma de chiffrement homomorphe donné HCS déduit du message CM. Il est à noter que la communication dudit schéma de chiffrement homomorphe HCS au sein du message CM n'est requise que s'il existe une pluralité de schémas de chiffrement homomorphe disponibles. On entend par « paramètre HCS » toute information permettant de renseigner le dispositif électronique 10 du schéma de chiffrement homomorphe qu'il doit exploiter. Si un seul schéma de chiffrement homomorphe est exploité, celui-ci peut être connu du dispositif électronique 10 lors d'une étape de configuration préalable. Dans ce cas, le schéma de chiffrement homomorphe HCS n'est pas désigné dans le message CM.

Lorsque les données biométriques de référence RD, CRD et les données biométriques candidates CD, CDD sont issues d'une image d'une empreinte digitale FP, elles désignent respectivement des types de minutie, des attributs caractéristiques desdites minuties et des coordonnées desdites minuties au sein de ladite image. En variante, lorsque lesdites données biométriques de référence RD, CRD et les données biométriques candidates CD, CDD sont issues d'une image d'un iris, elles désignent respectivement un ensemble de caractéristiques de motifs présents dans ladite image, caractéristiques comprises dans un ensemble de caractéristiques comprenant une moyenne de valeur de pixels, une distribution de valeurs desdits pixels, une entropie, etc. Dans ce cas, une zone d'intérêt AI peut être désignées par des paramètres de sélection SP comme étant un anneau centré autour du centre de l'iris ou bien un cadran de ce dernier.

Une fois les données biométriques candidates chiffrées CCD produites, en un instant t3 sur la figure 3, le dispositif électronique 10 provoque la mise en œuvre d'une sous-étape 1213 de transmission desdites données biométriques candidates chiffrées CCD à destination de l'entité électronique de service 20. Comme évoqué précédemment, l'invention prévoit un mode de réalisation avantageux selon lequel, le dispositif électronique 10 met en œuvre une sous-étape 1124 de suppression des données biométriques candidates CD, voire des données biométriques candidates chiffrées CCD, à l'issue de la transmission 1213 de ces dernières à destination de l'entité électronique de service 20. Ainsi, de nouvelles données biométriques candidates chiffrées CCD devront être à nouveau produites lors d'une requête en authentification biométrique AQ subséquente.

A la réception par l'entité électronique de service 20 des données biométriques candidates chiffrées CCD, transmises par le dispositif électronique 10, l'étape de collecte 121 est terminée. L'entité électronique de service 20 déclenche alors la mise en œuvre d'une étape 122 de comparaison des données biométriques candidates CCD avec des données biométriques de référence chiffrées contenues dans sa mémoire de données 22. Une telle étape 122 consiste en une opération de comparaison homomorphe entre les données biométriques candidates chiffrées CCD et des données biométriques de référence chiffrées CRD. Une mesure de ressemblance SM entre les deux données biométriques chiffrées CCD et CRD peut être réalisée sans avoir à exploiter ou exposer en tant que telles, les données biométriques de référence RD et candidates CD dont découlent respectivement les données chiffrées CRD et CCD. L'utilisation d'un schéma de chiffrement homomorphe permet d'obtenir une telle mesure de ressemblance SM similaire à celle que l'on aurait obtenu en comparant le clair des données CD et RD si celles-ci étaient disponibles. Une telle étape 122 peut être itérée tant que ladite mesure SM est jugée insuffisante pour identifier l'individu 2 en parcourant la banque de données biométriques de référence chiffrées présentes dans la mémoire de données 22.

L'étape de comparaison 122 s'achève sur un résultat attestant ou rejetant la demande d'authentification biométrique.

Selon le résultat de ladite étape 122, le procédé 100 comporte une étape 130 pour autoriser ou rejeter un accès au service S à l'individu 2 (instant t4 sur la figure 3) dont l'identité a été confirmée ou rejetée par l'entité électronique de service 20.

Dans l'exemple illustré en lien avec les figures 1 et 3, l'étape 110 d'enrôlement d'individu et l'étape 122 de comparaisons des données biométriques chiffrées sont réalisées par l'entité électronique de service 20.

La figure 4, en liaison avec la figure 1, décrit un procédé d'authentification biométrique homomorphe mis en œuvre par un système 1 comportant en outre une entité électronique de confiance 30 en communication 31 avec l'entité électronique de service 20. Une telle entité électronique de confiance 30, par exemple gouvernementale, agit ainsi en tant que tiers de confiance et permet de réduire les obligations et garanties pesant sur l'entité électronique de service 20. Selon ce mode de réalisation, l'invention prévoit que l'étape 110 d'enrôlement, précédemment décrite en lien avec la figure 3, soit mise en œuvre par l'entité électronique de confiance 30. Ainsi, cette dernière se charge de collecter des données biométriques de référence RD pour chaque individu 2. Une telle étape 110 comporte tout d'abord une sous-étape de production de données biométriques de référence RD par la collecte d'informations biométriques au moyen d'un capteur adapté. Pour ne pas exposer de telles données de références à d'éventuelles attaques qui pourraient nuire à la confidentialité de telles données de référence, lorsque celles-ci doivent être communiquées à une entité électronique de service 20, l'étape d'enrôlement 110 conduite par l'entité électronique de confiance 30 comporte une sous-étape de chiffrement desdites données biométriques de référence RD pour produire des données biométriques de référence chiffrées CRD selon un schéma de chiffrement homomorphe donné HCS. L'étape d'enrôlement 110 comporte alors une sous-étape d'enregistrement desdites données biométriques de référence chiffrées CRD dans une mémoire de données de l'entité électronique de confiance 30. Cette dernière satisfaisant à de hauts critères de robustesse, il n'est pas nécessaire de prévoir une suppression desdites données biométriques de référence RD à l'issue de la production des données biométriques de référence chiffrées CRD.

En un instant noté t1 sur la figure 4, une telle étape d'enrôlement 110 peut être itérée pour enrôler différents individus 2 désireux d'accéder à un service S dont l'accès est régi par une entité électronique de service 20. L'entité électronique de confiance 30 constitue ainsi une banque de données biométriques de référence dans sa mémoire de données.

Pour pouvoir répondre favorablement à des requêtes en authentification biométrique AQ émanant de dispositifs électroniques 10 associé à des individus 2 désireux d'accéder à un service S donné, l'entité électronique de service 20 doit se doter d'un référentiel en termes de données biométriques de référence chiffrées respectivement associées à des individus 2 ayant souscrit à un abonnement permettant un accès au service S donné. Pour cela, l'invention prévoit que ledit référentiel puisse être constitué et/ou régulièrement mis à jour au moyen de requêtes en chargement LQ de données biométriques de référence chiffrées CRD. Comme l'indique la figure 4, en un instant t2, éventuellement itéré, une telle requête LQ peut être émise par l'entité électronique de service 20 à destination de l'entité électronique de confiance 30. En réponse à celle-ci, en une étape 113, tout ou partie des données biométriques de référence chiffrées CRD détenues par l'entité électronique de confiance 30, est communiqué par ladite l'entité électronique de confiance 30 à l'entité électronique de service 20. De telles données biométriques de référence chiffrées CRD, transmises en réponse à une requête en chargement LQ émanant de ladite entité électronique de service 20, peuvent faire l'objet d'un processus classique de signature par clé publique, de sorte que ladite entité électronique de service 20 puisse s'assurer de la provenance desdites données CRD en vérifiant la signature de l'entité électronique de confiance 30. De même, lesdites données chiffrées CRD peuvent en outre être doublement chiffrées, préalablement à leur envoi, à l'aide de la clé publique de l'entité électronique de service 20, celle-ci étant la seule à pouvoir recouvrer lesdites données chiffrées CRD en déchiffrant le ou les messages émanant de l'entité électronique 30 en exploitant sa clé privée. En outre, lesdites données biométriques de référence chiffrées CRD sont accompagnées lors de leur transmission par un paramètre HCS désignant le schéma de chiffrement homomorphe mis en œuvre pour constituer lesdites données biométriques de référence chiffrées CRD.

Selon l'exemple de mise en œuvre illustré par la figure 4, l'étape 121 mise en œuvre par le dispositif électronique 10 et préalablement décrite en lien avec l'exemple de mise en œuvre illustré par la figure 3 est inchangée. Ainsi, en réponse à une requête en authentification biométrique AQ adressée (en un instant t3 sur la figure 4), l'entité électronique de service 20 invite ledit dispositif électronique 10 à constituer des données biométriques candidates chiffrées selon ledit schéma de chiffrement homomorphe HCS. De telles données biométriques candidates chiffrées CCD sont communiquées en un instant t4 comme l'indique la figure 4, à destination de l'entité électronique de service 20.

Contrairement à l'exemple illustré en lien avec la figure 3, un procédé d'authentification biométrique homomorphe selon la figure 4, prévoit que la comparaison 122 en tant que telle, desdites données biométriques candidates chiffrées CCD avec des données biométriques de référence chiffrées CRD soit déléguée à l'entité électronique de confiance 30 qui a avantageusement réalisé l'enrôlement 110 ou bien à toute autre entité électronique de confiance agencée pour mettre en œuvre une telle délégation. Ainsi, selon cette variante de réalisation, l'étape 122 de comparaison des données biométriques candidates chiffrées CCD avec des données biométriques de référence chiffrées CRD et de production d'une mesure de ressemblance SM entre lesdites données CCD et CRD est mise en œuvre par ladite entité électronique de confiance 30. Pour initier une telle délégation, ladite étape 122 de comparaison est mise en œuvre en réponse à une requête en comparaison homomorphe HCQ élaborée par l'entité électronique de service 20 et adressée à l'attention de ladite entité électronique de confiance 30. Une telle requête en comparaison homomorphe HCQ véhicule les données biométriques candidates chiffrées CCD et les données biométriques de référence chiffrées CRD, voire le schéma de signature homomorphe HCS. Elle véhicule également les paramètres de sélection SP d'une région d'intérêt IA désignée par l'entité électronique 20. La mesure de ressemblance SM entre les données biométriques candidates chiffrées CCD et les données biométriques de référence chiffrées CRD est transmise en réponse par l'entité électronique de confiance 30 à ladite entité électronique de service 20. Cette dernière exploite ladite mesure SM à l'instar du procédé 100 illustré en lien avec la figure 3. Ainsi, en une étape 130 mise en œuvre par ladite entité électronique 20, l'accès au service S est octroyé ou rejeté à la lumière des résultats de la mise en œuvre de l'étape de comparaison 122 ainsi déléguée à l'entité électronique de confiance 30.

Les exemples décrits précédemment en liaison avec les figures 1, 3 et 4 permettent ainsi d'illustrer des systèmes 1 comportant une entité électronique de service 20 agencée pour fournir un accès à un service S et un dispositif électronique 10 associé à un individu 2 voire une entité électronique de confiance 30 en communication avec ladite entité électronique de service 20, adaptés respectivement pour mettre en œuvre un procédé 100 d'authentification biométrique homomorphe conforme à l'invention.

L'invention a été décrite préférentiellement en lien avec des informations biométriques sous la forme d'empreintes digitales ou d'iris. Elle ne saurait être limitée à ces seuls exemples d'informations biométriques et pourrait adresser d'autres informations telles que la voix, les caractéristiques d'un visage, etc. Des paramètres de sélection SP permettraient de désigner certains sons au sein d'un message vocal libre ou imposé, ou encore des zones caractéristiques d'un visage (œil, nez, bouche). Il suffit que les données biométriques de référence et candidates comportent des caractéristiques permettant de discriminer un individu parmi une pluralité d'individus sans ambiguïté.

## Revendications

1. Procédé (100) d'authentification biométrique homomorphe, ledit procédé (100) étant conçu pour être mis en œuvre par un système (1) comprenant une entité électronique de service (20) agencée pour fournir un accès à un service (S) à un individu (2) désireux d'accéder audit service, ledit procédé (100) comportant :
- une étape (110) d'enrôlement d'un individu consistant à collecter des premières données biométriques dites « de référence » (RD) dudit individu (2), ladite étape (110) d'enrôlement comportant :
∘ une sous-étape de production (111) de données biométriques de référence chiffrées (CRD) selon un schéma de chiffrement homomorphe donné (HCS) réalisée à partir des données biométriques de référence (RD),
o une sous-étape d'enregistrement (112) desdites données biométriques de référence chiffrées (CRD) dans une mémoire de données (22) ;
- une étape (120) d'authentification biométrique de l'individu (2) désireux d'accéder audit service, consistant en :
∘ une étape (121) de collecte de deuxièmes données biométriques dites « candidates » (CD) dudit individu (2), ladite étape (121) de collecte comportant :
▪ une sous-étape (1211) d'extraction de caractéristiques biométriques à l'aide d'un capteur adapté à la nature d'une information biométrique d'intérêt et de production des données biométriques candidates (CD) ;
▪ une sous-étape (1212) de production de données biométriques candidates chiffrées (CCD) à partir desdites données biométriques candidates (CD) et du schéma de chiffrement homomorphe donné (HCS) ;
∘ une étape de comparaison (122) desdites premières et deuxièmes données biométriques (RD, CD) et de production d'une mesure de la ressemblance (SM) entre lesdites premières et deuxièmes données biométriques, ladite étape (122) de comparaison desdites premières et deuxièmes données biométriques (RD, CD) et de production d'une mesure de ressemblance (SM) consistant en une opération de comparaison homomorphe entre les données biométriques candidates chiffrées (CCD) et les données biométriques de référence chiffrées (CRD) sans avoir à exploiter ni exposer en tant que telles les données biométriques de référence (RD) et candidates (CD) ;
- une étape (130) d'autorisation d'accès au service (S) qui est fonction de la mesure de ressemblance (SM) ;
ledit procédé (100) étant **caractérisé en ce que** :
- le système (1) comporte un dispositif électronique (10) associé à un individu (2) désireux d'accéder audit service (S), ledit dispositif électronique (10) étant agencé pour communiquer (11) avec ladite entité électronique de service (20), comporter le capteur adapté à l'extraction de caractéristiques biométriques et émettre une requête en authentification biométrique (AQ) à destination de l'entité électronique de service (20) ;
- l'entité électronique de service (20) est agencée pour, à réception d'une telle requête en authentification biométrique (AQ), transmettre un message (CM) invitant ledit dispositif électronique (10) à produire les données biométriques candidates (CD), ledit message (CM) comportant le schéma de chiffrement homomorphe (HCS) et des paramètres de sélection (SP) d'une ou plusieurs régions d'intérêt de faibles dimensions au regard des dimensions de l'intégralité des données biométriques candidates disponibles lors de l'extraction de l'information biométrique par ledit capteur adapté ;
- l'étape (121) de collecte des deuxièmes données biométriques candidates (CD) de l'individu (2) :
∘ est mise en œuvre par ledit dispositif électronique (10) associé à un individu (2) à la réception dudit message (CM) l'invitant à produire les données biométriques candidates (CD) ;
∘ est agencée de sorte la sous-étape (1211) de production des données biométriques candidates (CD) consiste en une production de données candidates propres à la ou aux régions d'intérêt de faibles dimensions désignées par les paramètres de sélection (SP) ;
∘ comporte une sous-étape (1213) de transmission desdites données biométriques candidates chiffrées (CCD) selon ledit schéma de chiffrement homomorphe (HCS), à l'entité électronique de service (20).

2. Procédé (100) selon la revendication 1, pour lequel l'étape (110) d'enrôlement comporte une sous-étape (113) de suppression des données biométriques de référence (RD) à l'issue de la production (111) des données biométriques de référence chiffrées (CRD).

3. Procédé (100) selon la revendication 1 ou 2, pour lequel l'étape (121) de collecte des deuxièmes données biométriques candidates (CD) comporte une sous-étape (1214) de suppression des données biométriques candidates (CD) à l'issue de la transmission (1213) des données biométriques candidates chiffrées (CCD) à destination de l'entité électronique de service (20).

4. Procédé (100) selon la revendication 3, pour lequel l'étape (121) de collecte des deuxièmes données biométriques candidates (CD) comporte une sous-étape (1215) de suppression des données biométriques candidates chiffrées (CCD) à l'issue de la transmission (1213) desdites données biométriques candidates chiffrées (CCD) à destination de l'entité électronique de service (20).

5. Procédé (100) selon l'une quelconque des revendications 1 à 4, pour lequel les données biométriques de référence (RD, CRD) et les données biométriques candidates (CD, CDD) sont issues d'une image d'une empreinte digitale et désignent respectivement des types de minutie, des attributs caractéristiques desdites minuties et des coordonnées desdites minuties au sein de ladite image.

6. Procédé (100) selon la revendication 5, pour lequel les paramètres de sélection (SP) consistent en la désignation d'une région d'intérêt (IA) au sein de l'image de l'empreinte digitale.

7. Procédé (100) selon l'une quelconque des revendications 1 à 4, pour lequel les données biométriques de référence (RD, CRD) et les données biométriques candidates (CD, CDD) sont issues d'une image d'un iris et désignent respectivement un ensemble de caractéristiques de ladite image comprises dans un ensemble de caractéristiques comprenant une moyenne de valeurs de pixels de l'image, une distribution de valeurs desdits pixels au sein de l'image, une entropie.

8. Procédé (100) selon la revendication 7, pour lequel les paramètres de sélection (SP) consistent en la désignation de tout ou partie d'un anneau ou d'un cadran de l'iris.

9. Procédé (100) selon l'une quelconque des revendications 1 à 8, pour lequel l'étape d'enrôlement (110) et/ou l'étape de comparaison (122) des premières et deuxièmes données biométriques chiffrées (CRD, CCD) et de production d'une mesure de ressemblance (SM) sont mises en œuvre par l'entité électronique de service (20).

10. Procédé (100) selon l'une quelconque des revendications 1 à 9, ledit système (1) comportant une entité électronique de confiance (30) en communication (31) avec l'entité électronique de service (20), pour lequel l'étape (122) de comparaison des premières et deuxièmes données biométriques chiffrées (CRD, CCD) et de production d'une mesure de ressemblance (SM) est mise en œuvre par ladite entité électronique de confiance (30), ladite étape (122) de comparaison étant mise en œuvre en réponse à une requête en comparaison homomorphe (HCQ) émanant de l'entité électronique de service (20), ladite requête en comparaison homomorphe (HCQ) véhiculant les données biométriques candidates chiffrées (CCD) et les données biométriques de référence chiffrées (CRD), la mesure de ressemblance (SM) étant transmise en réponse par l'entité électronique de confiance (30) à ladite entité électronique de service (20).

11. Procédé selon la revendication 10, pour lequel l'étape d'enrôlement (110) est mise en œuvre par l'entité électronique de confiance (30), les données biométriques de référence chiffrées (CRD) étant communiquées par ladite entité électronique de confiance (30) à l'entité électronique de service (20) en réponse à une requête en chargement (LQ) émanant de ladite entité électronique de service (20).

12. Système (1) comportant une entité électronique de service (20) agencée pour fournir un accès à un service (S) et un dispositif électronique (10) associé à un individu (2), ledit système étant agencé pour mettre en œuvre un procédé selon l'une quelconque des revendications 1 à 9.

13. Système (1) selon la revendication 12 comportant une entité électronique de confiance (30) en communication avec l'entité électronique de service (20), ledit système étant agencé pour mettre en œuvre un procédé selon la revendication 10 ou 11.
